# EUROPEAN PATENT SPECIFICATION

(11) **EP 2 933 193 B1**
(45) Date of publication and mention of the grant of the patent: **18.10.2017**
(21) Application number: 14001405.1
(22) Date of filing: 17.04.2014
(51) Int. Cl.: B64G 7/00, F25D 3/10, F28F 3/12, F28F 21/08, F28D 1/047, F28D 1/053, F28F 1/32, F28D 21/00

(54) **Shroud for a temperature control device, method for producing the same and use of such a shroud**
Deckband für Temperaturregelungsvorrichtung, Verfahren zu ihrer Herstellung sowie Verwendung eines solchen Deckbandes
Protection pour un dispositif de contrôle de température ainsi que procédé de fabrication et utilisation d'une telle protection

(43) Date of publication of application: 21.10.2015
(73) Proprietor: WEISS UMWELTTECHNIK GMBH, 35447 Reiskirchen (DE)
(72) Inventor: Sammour, Nathalie, Dr., 78210 Saint Cyr l'école (FR); Kerouault, Philippe, Ing., 95300 Pontoise (FR); Cousin, Marc, 95420 Cléry en vexin (FR)
(74) Representative: advotec.

(56) References cited:
- EP-A1- 2 468 486
- WO-A1-01/75841
- FR-A- 1 573 389
- US-A- 3 130 562
- US-A- 4 785 955

## Description

The invention relates to a shroud for a temperature control device and to a method for producing a shroud, the shroud being arrangeable in a temperature chamber, the shroud having a feeding duct, a discharge duct and at least one cooling duct for a gaseous and/or liquid cooling medium, the cooling duct serving to cool the temperature chamber and being connected to the feeding duct and to the discharge duct, the shroud having at least one electric heating element, which serves to heat the temperature chamber, the shroud has at least one heat exchanger body for cooling and heating the temperature chamber. The invention further relates to a use of such a shroud.

Temperature chambers are regularly used for various purposes, such as for treating, measuring or testing products. Temperature chambers regularly comprise a closable temperature room, in which the product(s) can be arranged. Depending on the type of product, the temperature room can have a correspondingly adapted size and shape and provide a temperature in a range of -196° C to +200° C. A field of application for temperature chambers of this kind is a testing of products for aerospace, for example, because extremely large temperature differences within short time can occur naturally in said field.

In order to be able to realize a quick change in temperature between very high and very low temperatures and vice-versa with the temperature chamber, known temperature chambers are regularly provided with a temperature control device including shrouds and lining elements respectively in the area of a temperature room of the temperature chamber. For instance, the temperature room can be surrounded by a plurality of shrouds, by means of which high and low temperatures can be generated in the temperature chamber and in a specimen respectively by conduction and/or radiation in a comparatively quick manner. The shrouds can be regulated independently so as a specimen ca be cooled on one side and heated on another side. Thus, the shrouds can simulate a rotation of a temperature which represents a rotation of a satellite on an orbital trajectory.

From JP 306 9909 B2, a temperature chamber is known whose temperature room is surrounded by shrouds on all sides. The shrouds can be cooled and brought to a very low temperature by means of liquid nitrogen via a feeding duct, the nitrogen being discharged via a discharge duct. For the actual heat exchange and cooling of the temperature room, the liquid nitrogen is led through a cooling duct of the shroud in the area of the temperature room. On a rearward side of the cooling duct, which is facing away from the temperature room, an electric heating element with a reflector is arranged. If the temperature room is to be heated to a higher temperature after it has been cooled, the electric heating element or the electric heating elements of the shrouds are turned on, heat radiation of the electric heating elements being reflected by the reflectors in the direction of the temperature room.

Depending on the desired temperature in the temperature room, gaseous or liquid cooling medium can be fed to the cooling duct via the feeding duct. In this respect, a blower can be arranged in the feeding duct, by which a sufficiently large volume flow or media pressure can be generated in the feeding duct. The blower ensures the mass flow of cooling medium required for generating a temperature of -196° C, for example. It is disadvantageous, however, that at such low temperatures leaks can easily occur in the area of the blower and the blower may fail. It is further disadvantageous in the known temperature control devices that they require large amounts of the cooling medium in order to be able to reach lowest temperatures at all. Also, a temperature change from very high to very low temperatures and vice versa happens only slowly.

FR 1 573 389 A discloses a shroud for a temperature control device of a temperature chamber, the shroud is arranged in a temperature chamber and has a feeding duct, a discharge duct and at least one cooling duct for a gaseous and/or liquid cooling medium. The cooling duct serves to cool the temperature chamber and is connected to the feeding duct and to the discharge duct. The shroud has at least one electric heating element, which serves to heat the temperature chamber, and at least one heat exchanger body for cooling and heating the temperature chamber. The cooling duct and the electric heating element are arranged on the heat exchanger body.

Thus, it is the object of the present invention to propose a shroud for a temperature control device, a method for producing a shroud, and a use of a shroud by which an operation of a temperature chamber can be improved and take place more cost-effectively.

This object is attained by a shroud having the features of claim 1, a method having the features of claim 15, and a use of a shroud having the features of claim 17.

The shroud according to the invention for a temperature control device can be arranged in a temperature chamber, the shroud having a feeding duct, a discharge duct and at least one cooling duct for a gaseous and/or liquid cooling medium, the cooling duct serving to cool the temperature chamber and being connected to the feeding duct and to the discharge duct, the shroud having at least one electric heating element, which serves to heat the temperature chamber, the shroud having at least one heat exchanger body for cooling and heating the temperature chamber, the cooling duct and the electric heating element being arranged in the heat exchanger body, said heat exchanger body being formed of cast metal in which the cooling duct and the electric heating element are at least partially arranged.

A selective cooling and heating of the temperature chamber and a change between high and low temperatures and vice versa can take place comparatively quickly in particular due to the fact that the shroud comprises the heat exchanger body with the cooling duct and the electric heating element being arranged in the heat exchanger. This is made possible in particular by the fact that a heat exchanger surface between the cooling duct and the electric heating element is substantially enlarged because the cooling duct and the electric heating element are arranged or positioned together within the heat exchanger body. Also, a direct cooling or heating of the heat exchanger body becomes possible in this way, wherein the heating element can be cooled and the cooling duct can be heated. A quick temperature change of the heat exchanger body in this case results in particular from the fact that a large temperature difference can be produced between the cooling duct and the heating element, which can directly affect a temperature of the cooling duct or of the heating element when they are heated and cooled, respectively. Apart from a quick temperature change due to an improved heat transfer, a required mass flow of the cooling medium or a consumption of electrical energy can also be reduced, the temperature control device thus being operable in a more cost-effective manner.

The cooling duct and the electric heating element can be arranged in a common plane in the heat exchanger body. The arrangement of the electric heating element and of the cooling duct in a common plane simplifies production of the heat exchanger body and improves a heat exchange between the electric heating element and the cooling duct in that they are positioned relatively closely to each other. Further, at least one heating duct can be formed in the heat exchanger, into which the heating element is inserted. The heat exchanger body can be formed in multiple parts. It consists of a metal that is a good heat conductor. In a multi-part embodiment, the heat exchanger body can be composed or assembled of cast individual parts, wherein the individual parts can then form the cooling duct and the heating duct. Alternatively, the cooling duct and the electric heating element can be accommodated between the individual parts.

Further, the cooling duct and the electric heating element can be encapsulated in the heat exchanger body. In that case, the heat exchanger body can be formed in one piece. However, in that case, a multi-part embodiment of the heat exchanger is still possible. For example, the electric heating element can have a mantle of stainless steel so that the electric heating element cannot be damaged during encapsulation. Thus, the cooling duct, which in its simplest embodiment can be formed by a pipe, can be arranged in a cavity of a casting mold together with the electric heating element, wherein the material of the heat exchanger body can be cast into the cavity. Then, when the material solidifies, the heat exchanger body is formed, which can completely surround the electric heating element and the cooling duct as needed.

The heat exchanger body can be made of cast aluminum or of an aluminum alloy. Due to the relatively low melting point of aluminum, the heat exchanger body can be produced in a simple and cost-effective manner, the electric heating element and the cooling duct thus being hardly stressed during a casting process. Further, aluminum is a particularly suitable heat exchanger material because of its physical properties.

The cooling medium can be gaseous and/or liquid nitrogen (N₂). Liquid nitrogen is available at a low cost and it is particularly suitable for cryogenic applications. Preferably, liquid nitrogen can be introduced into the feeding duct, wherein the nitrogen can change its phase when the cooing duct is heated by the electric heating elements.

In one embodiment of the shroud, a plurality of cooling ducts can be formed. For instance, the cooling ducts can be arranged in the heat exchanger body, In particular if a steady temperature control of the heat exchanger body is to occur with respect to a surface of the heat exchanger body, said temperature can be controlled particularly well by means of a series of cooling ducts that are independent of one another. Thus, it is also possible to lead a large amount of cooling medium through the cooling ducts and to thereby allow a fast cooling of the heat exchanger body.

The cooling ducts can also run in a meandering and/or parallel fashion in the heat exchanger body. Thus, it is possible to control the temperature of the heat exchanger body in a steady manner substantially by the arrangement of the cooling ducts irrespective of the shape of the heat exchanger body, or, if need be, to arrange the cooling ducts irregularly within the heat exchanger body.

Among the feeding duct, the discharge duct and the cooling duct, only the cooling duct can run within the heat exchanger body. The feeding duct and the discharge duct can then be arranged outside of the heat exchanger body. The cooling duct can also be arranged outside of the heat exchanger body in sections, the cooling duct then still running mainly within the heat exchanger body. Basically, however, it is conceivable to arrange the feeding duct and the discharge duct together with the cooling duct within the heat exchanger body.

Advantageously, the feeding duct can form a plurality of distribution ducts and/or the discharge duct can form a plurality of collecting ducts. Thus, it is possible to evenly distribute the cooling medium among the cooling duct(s) via the distribution ducts. The cooling medium can also be discharged from the cooling duct(s) via collecting ducts and can be collected in the discharge duct.

Consequently, a cooling duct can be connected to a plurality of distribution ducts and/or of collecting ducts. Thus, it becomes possible to supply the cooling medium to a single cooling duct via distribution ducts that are arranged in regular intervals at the cooling duct, and to discharge the cooling medium via multiple collecting ducts. Thus, an even steadier temperature control of the heat exchanger body can take place.

The feeding duct, the discharge duct and the cooling duct can be made of copper or stainless steel. Preferably, pipes and fittings of high-quality stainless steel can be used for forming the respective ducts. It is also possible to produce the respective ducts by bending a pipe of the mentioned materials in sections.

Further, it can be provided that a plurality of electric heating elements is arranged in the heat exchanger body. Thus, it becomes possible to achieve a steadily controlled temperature of the heat exchanger body by means of the heating elements. This can in particular be the case if the heat exchanger body has a comparatively large mass and a correspondingly high heating capacity is required.

The shroud can have a plate-shaped, preferably a rectangular, cylindrical or circular shape. In consequence, the heat exchanger body can have the same shape. Depending on the desired shape of a temperature room, the shroud can be adapted to said shape. In this regard, it is possible to use a plurality of shrouds to line the temperature room. For example, two or more shrouds in the form of half shells can also be used instead of one cylindrically shaped shroud.

The temperature chamber according to the invention comprises a temperature control device and at least one shroud according to the invention. Further advantageous embodiments of a temperature chamber arise from the feature descriptions of the dependent claims referring back to device claim 1.

In the method according to the invention for producing a shroud for a temperature control device of a temperature chamber, the shroud can be arranged in a temperature chamber, the shroud having a feeding duct, a discharge duct and at least one cooling duct for a gaseous and/or liquid cooling medium, the cooling duct serving to cool the temperature chamber and being connected to the feeding duct and to the discharge duct, the shroud having at least one electric heating element, which serves to heat the temperature chamber, the shroud having at least one heat exchanger body for cooling and heating the temperature chamber, the cooling duct and the electric heating element being arranged at least partially in a cavity of a casting mold for the formation of the heat exchanger body, and metal being cast into the cavity.

Because the liquid metal is cast into the cavity, it is consequently possible to form a heat exchanger body in which the cooling duct and the electric heating element are arranged. The cooling duct and the electric heating element are thus surrounded by the material of the heat exchanger body. In this manner, a shroud that permits a particularly quick and effective temperature control by means of the cooling medium or by means of electrical energy can be produced in a particularly simple manner. With regard to the advantages of the method according to the invention, reference is made to the description of the advantages of the shroud according to the invention.

The shroud can be produced in a particularly simple manner if the liquid metal is cast by means of a die casting process. Thus, in addition to using a well-established casting process to produce the shroud, it is also possible to form a particularly dense and homogenous heat exchanger body. For instance, by way of the die casting process, a formation of undesired blowholes and porosities in the heat exchanger body can be largely avoided, allowing the heat conduction properties of the heat exchanger body to be further improved.

In the use according to the invention of a shroud according to the invention for a temperature control device of a temperature chamber, only liquid nitrogen (N₂) is introduced into the feeding duct of the shroud in order to cool the temperature chamber. The exclusive use of liquid nitrogen is made possible in particular by the fact that the shroud permits an especially quick and effective temperature control and temperature change due to the joint arrangement of the cooling duct and the electric heating element in the heat exchanger body. Hence, a blower in the feeding duct as it is common in the temperature control devices known from the state of the art is entirely unnecessary. Moreover, it is possible to substantially reduce an amount or a consumption of liquid nitrogen in comparison to the temperature control devices known from the state of the art. Further advantageous embodiments of a use of the shroud arise from the feature descriptions of the dependent claims referring back to the device claim.

In the following, preferred embodiments of the invention will be explained in more detail with reference to the accompanying drawings.

In the figures:
- **Fig. 1**: shows a perspective view of ducts in a first embodiment of a shroud;
- **Fig. 2**: shows a perspective view of the shroud;
- **Fig. 3**: shows a front view of the ducts of **Fig. 1**;
- **Fig. 4**: shows a lateral view of the shroud;
- **Fig. 5**: shows a top view of the shroud;
- **Fig. 6**: shows a schematic illustration of a temperature control device;
- **Fig. 7**: shows a front view of a second embodiment of a shroud;
- **Fig. 8**: shows a top view of the second embodiment of the shroud.

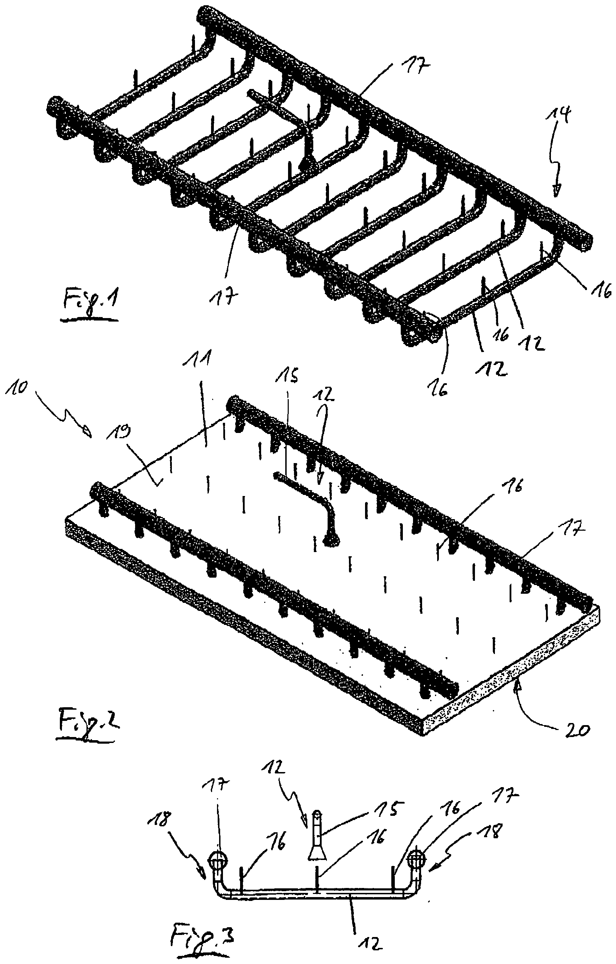

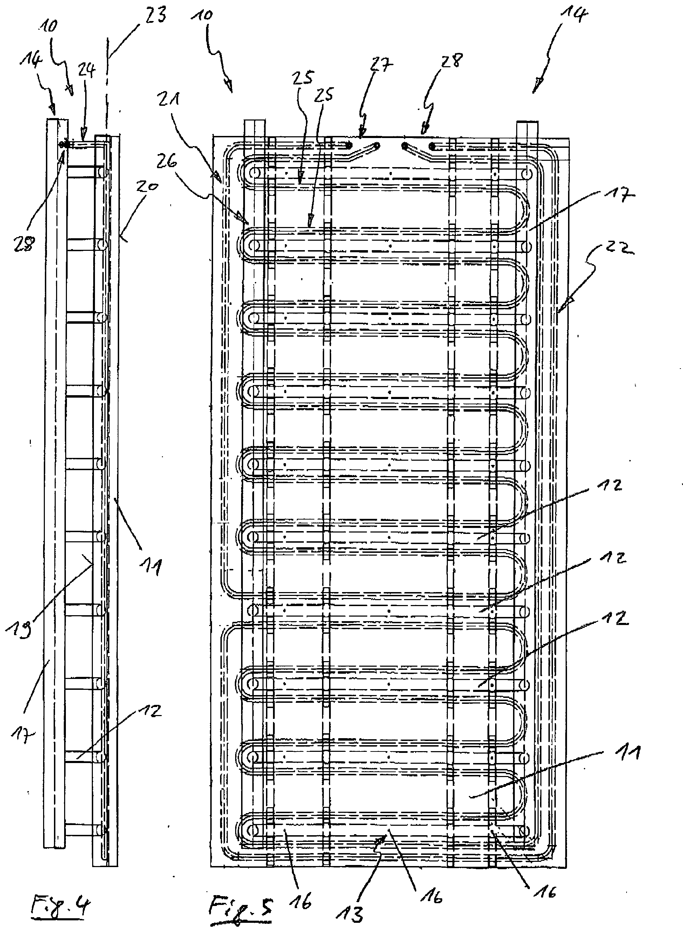

A first embodiment of a shroud is illustrated in an overall view of **Figs. 1** to **5****.** The shroud 10 substantially comprises a heat exchanger body 11 made of cast aluminum and a number of cooling ducts 12, a feeding duct 13 and a discharge duct 14. The feeding duct 13 forms a connecting piece 15 and a series of distribution ducts 16. Each cooling duct 12 is respectively connected to three distribution ducts 16, the distribution ducts 16 having a connection (not illustrated) to the connecting piece 15.

The discharge duct 14 forms two collecting ducts 17, which in turn end in a common collecting duct section (not illustrated). The cooling ducts 12 are arranged parallel and in regular intervals in the heat exchanger body 11, the cooling ducts 12 being connected with their respective ends 18 on both sides to the collecting ducts 17. The ends 18 and the distribution ducts 16 protrude in sections out of a substantially plane and straight surface 19 of the rectangularly formed heat exchanger body 11. An opposite surface 20 of the heat exchanger body 11 faces a temperature room when the shroud 10 is installed in a temperature chamber (not illustrated).

Further, the shroud 10 comprises two electric heating elements 21 and 22, the electric heating elements 21 and 22 being substantially arranged in a common plane 23 with the cooling ducts 12 in the heat exchanger body 11. The electric heating elements 21 and 22 have a mantle 24 of stainless steel. Further, the electric heating elements 21 and 22 are arranged or installed in a meandering fashion in the heat exchanger body 11. Element sections 25 of meanders 26 are arranged comparatively closely to the cooling ducts 12 so that a fast temperature change via a large temperature difference of electric heating elements 21 and 22 and of the cooling ducts 12 can be achieved due to the dense arrangement in sections. The heating elements 21 and 22 each have connections 27 and 28, respectively, which also protrude out of the surface 19 of the heat exchanger 11.

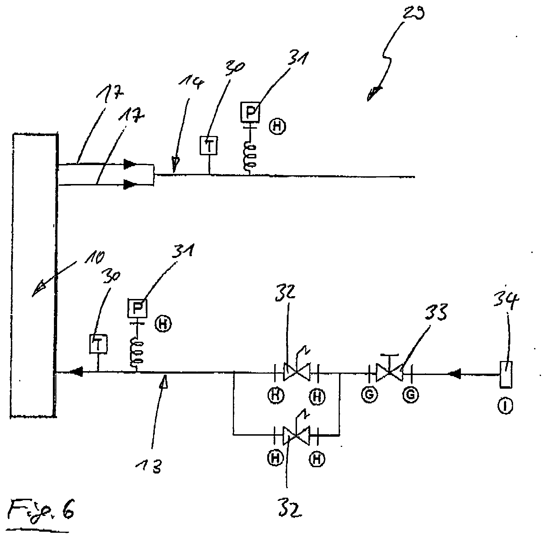

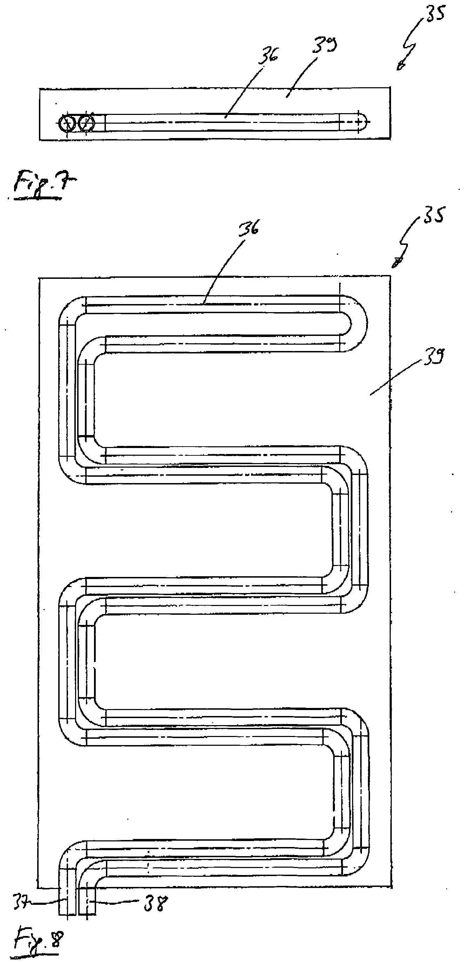

**Fig. 6** shows a schematic illustration of a temperature control device 29 inclduing the shroud 10. A temperature sensor 30 and a pressure sensor 31 are arranged both in the feeding duct 13 and in the discharge duct 14. Further, solenoid valves 32 and a manually operable valve 33 are arranged in the feeding duct 13. Liquid nitrogen (N₂) is introduced by a supply unit 34 via the feeding duct 13 into the shroud 10, a discharge taking place via the discharge duct 14. When the liquid nitrogen is introduced via the feeding duct 13, it is pressurized to approximately 2 bar. A blower for the nitrogen within the feeding duct 13 is not required. By means of the temperature control device 29, temperatures in a range of -196° C to +200° C can be generated. A consumption of liquid nitrogen and of electrical energy can be substantially reduced in comparison to the temperature control devices known from the state of the art. An overall view of **Figs. 7** and **8** shows a second embodiment of a shroud 35. The shroud 35 has a single cooling duct 36 with a direct connection to a feeding duct 37 and to a discharge duct 38. The cooling duct 36 runs in a parallel and meandering fashion within a heat exchanger body 39 made of cast aluminum. In the heat exchanger body 39, an electric heating element is arranged as well, which is not additionally illustrated here. Due to the described arrangement of the cooling duct 36, the shroud 35 can be formed in a particularly compact manner with the rectangular heat exchanger body 39.

## Claims

1. A shroud (10, 35) for a temperature control device (29) of a temperature chamber, the shroud being arrangeable in a temperature chamber, the shroud having a feeding duct (13, 37), a discharge duct (14, 38) and at least one cooling duct (12, 36) for a gaseous and/or liquid cooling medium, the cooling duct serving to cool the temperature chamber and being connected to the feeding duct and to the discharge duct, the shroud having at least one electric heating element (21, 22), which serves to heat the temperature chamber, the shroud has at least one heat exchanger body (11, 39) for cooling and heating the temperature chamber,
**characterized in that**
the cooling duct and the electric heating element are arranged in the heat exchanger body, said heat exchanger body being formed of cast metal in which the cooling duct and the electric heating element are at least partially arranged.

2. The shroud according to claim 1,
**characterized in that**
the cooling duct (12, 36) and the electric heating element (21, 22) are arranged in a common plane (23) in the heat exchanger body (11, 39).

3. The shroud according to claim 1 or 2,
**characterized in that**
the cooling duct (12, 36) and the electric heating element (12, 22) are encapsulated in the heat exchanger body (11, 39).

4. The shroud according to any of the preceding claims,
**characterized in that**
the heat exchanger body (11, 39) is made of cast aluminum or of an aluminum alloy.

5. The shroud according to any of the preceding claims,
**characterized in that**
the cooling medium is gaseous and/or liquid nitrogen.

6. The shroud according to any of the preceding claims,
**characterized in that**
a plurality of cooling ducts (12, 36) is formed.

7. The shroud according to any of the preceding claims,
**characterized in that**
cooling ducts (12, 36) run in a meandering and/or parallel fashion in the heat exchanger body (11, 39).

8. The shroud according to any of the preceding claims,
**characterized in that** among the feeding duct (13, 37), the discharge duct (14, 38) and the cooling duct (12, 36), only the cooling duct (12, 36) runs in the heat exchanger body (11, 39).

9. The shroud according to any of the preceding claims,
**characterized in that**
the feeding duct (13) forms a plurality of distribution ducts (16) and/or the discharge duct (14) forms a plurality of collecting ducts (17).

10. The shroud according to claim 9,
**characterized in that**
a cooling duct (12) is connected to a plurality of distribution ducts (16) and/or of collecting ducts (17).

11. The shroud according to any of the preceding claims,
**characterized in that**
the feeding duct (13, 37), the discharge duct (14, 38) and the cooling duct (12, 36) formed from copper or stainless steel.

12. The shroud according to any of the preceding claims,
**characterized in that**
a plurality of electric heating elements (21, 22) are arranged in the heat exchanger body (11, 39).

13. The shroud according to any of the preceding claims,
**characterized in that**
the shroud (10, 35) forms a plate-shaped, preferably a rectangular, cylindrical or circular shape.

14. A temperature chamber comprising a temperature control device (29) and at least one shroud (10, 35) according to any of the preceding claims.

15. A method for producing a shroud (10, 35) for a temperature control device (29) of a temperature chamber, the shroud being arrangeable in a temperature chamber, the shroud having a feeding duct (13, 37), a discharge duct (14, 38) and at least one cooling duct (12, 36) for a gaseous and/or liquid cooling medium, the cooling duct serving to cool the temperature chamber and being connected to the feeding duct and to the discharge duct, the shroud having at least one electric heating element (21, 22), which serves to heat the temperature chamber, the shroud has at least one heat exchanger body (11, 39) for cooling and heating the temperature chamber,
**characterized in that**
the cooling duct and the electric heating element are arranged at least partially in a cavity of a casting mold for the formation of the heat exchanger body, and metal is cast into the cavity.

16. The method according to claim 15,
**characterized in that**
the liquid metal is cast by means of a die casting process.

17. A use of a shroud (10, 35) according to any of the claims 1 to 14 for a temperature control device (29) of a temperature chamber, wherein only liquid nitrogen (N2) is introduced into the feeding duct (13, 37) of the shroud.

## Patentansprüche

1. Auskleidungselement (10, 35) für eine Temperiervorrichtung (29) einer Temperierkammer, wobei das Auskleidungselement in einer Temperierkammer anordbar ist, wobei das Auskleidungselement einen Zuführkanal (13, 37), einen Abführkanal (14, 38) und zumindest einen Kühlkanal (12, 36) für ein gasförmiges und/oder flüssiges Kühlmedium aufweist, wobei der Kühlkanal zur Kühlung der Temperierkammer dient und mit dem Zuführkanal und dem Abführkanal verbunden ist, wobei das Auskleidungselement zumindest ein elektrisches Heizelement (21, 22) aufweist, welches zur Erwärmung der Temperierkammer dient, wobei das Auskleidungselement zumindest einen Wärmeübertragerkörper (11, 39) zur Kühlung und Erwärmung der Temperierkammer aufweist,
**dadurch gekennzeichnet,**
**dass** der Kühlkanal und das elektrische Heizelement in dem Wärmeübertragerkörper angeordnet sind, wobei der Wärmeübertragerkörper aus gegossenem Metall besteht, in welchem der Kühlkanal und das elektrische Heizelement zumindest teilweise angeordnet sind.

2. Auskleidungselement nach Anspruch 1,
**dadurch gekennzeichnet,**
**dass** der Kühlkanal (12, 36) und das elektrische Heizelement (21, 22) in dem Wärmeübertragerkörper (11, 39) in einer gemeinsamen Ebene (23) angeordnet sind.

3. Auskleidungselement nach Anspruch 1 oder 2,
**dadurch gekennzeichnet,**
**dass** der Kühlkanal (12, 36) und das elektrische Heizelement (12, 22) in dem Wärmeübertragerkörper (11, 39) vergossen sind.

4. Auskleidungselement nach einem der vorangehenden Ansprüche,
**dadurch gekennzeichnet,**
**dass** der Wärmeübertragerkörper (11, 39) aus gegossenem Aluminium oder einer Aluminiumlegierung besteht.

5. Auskleidungselement nach einem der vorangehenden Ansprüche,
**dadurch gekennzeichnet,**
**dass** das Kühlmedium gasförmiger und/oder flüssiger Stickstoff ist.

6. Auskleidungselement nach einem der vorangehenden Ansprüche,
**dadurch gekennzeichnet,**
**dass** eine Mehrzahl von Kühlkanälen (12, 36) ausgebildet ist.

7. Auskleidungselement nach einem der vorangehenden Ansprüche,
**dadurch gekennzeichnet,**
**dass** Kühlkanäle (12, 36) mäanderformig und/oder parallel in dem Wärmeübertragerkörper (11, 39).

8. Auskleidungselement nach einem der vorangehenden Ansprüche,
**dadurch gekennzeichnet,**
**dass** unter dem Zuführkanal (13, 37), dem Abführkanal (14, 38) und dem Kühlkanal (12, 36) allein der Kühlkanal (12, 36) in dem Wärmeübertragerkörper (11, 39) verläuft.

9. Auskleidungselement nach einem der vorangehenden Ansprüche,
**dadurch gekennzeichnet,**
**dass** der Zuführkanal (13) eine Mehrzahl von Verteilerkanälen (16) und/oder der Abführkanal (14) eine Mehrzahl von Sammelkanälen (17) ausbildet.

10. Auskleidungselement nach Anspruch 9,
**dadurch gekennzeichnet,**
**dass** ein Kühlkanal (12) an eine Mehrzahl von Verteilerkanälen (16) und/oder Sammelkanälen (17) angeschlossen ist.

11. Auskleidungselement nach einem der vorangehenden Ansprüche,
**dadurch gekennzeichnet,**
**dass** der Zuführkanal (13, 37), der Abführkanal (14, 38) und der Kühlkanal (12, 36) aus Kupfer oder Edelstahl ausgebildet sind.

12. Auskleidungselement nach einem der vorangehenden Ansprüche,
**dadurch gekennzeichnet,**
**dass** eine Mehrzahl von elektrischen Heizelementen (21, 22) in dem Wärmeübertragerkörper (11, 39) angeordnet sind.

13. Auskleidungselement nach einem der vorangehenden Ansprüche,
**dadurch gekennzeichnet,**
**dass** das Auskleidungselement (10, 35) eine plattenförmige, vorzugsweise eine rechteckige, zylindrische oder kreisförmige Gestalt ausbildet.

14. Temperierkammer mit einer Temperiervorrichtung (29) und zumindest einem Auskleidungselement (10, 35) nach einem der vorangehenden Ansprüche.

15. Verfahren zur Herstellung eines Auskleidungselements (10, 35) für eine Temperiervorrichtung (29) einer Temperierkammer, wobei das Auskleidungselement in einer Temperierkammer anordbar ist, wobei das Auskleidungselement einen Zuführkanal (13, 37), einen Abführkanal (14, 38) und mindestens einen Kühlkanal (12, 36) für ein gasförmiges und/oder flüssiges Kühlmedium aufweist, wobei der Kühlkanal zur Kühlung der Temperierkammer dient und mit dem Zuführkanal und dem Abführkanal verbunden wird, wobei das Auskleidungselement zumindest ein elektrisches Heizelement (21, 22) aufweist, welches zur Erwärmung der Temperierkammer dient, wobei das Auskleidungselement zumindest einen Wärmeübertragerkörper (11, 39) zur Kühlung und Erwärmung der Temperierkammer aufweist,
**dadurch gekennzeichnet,**
**dass** zur Ausbildung des Wärmeübertragerkörpers der Kühlkanal und das elektrische Heizelement zumindest teilweise in einer Kavität einer Gießform angeordnet werden, und wobei Metall in die Kavität gegossen wird.

16. Verfahren nach Anspruch 15,
**dadurch gekennzeichnet,**
**dass** das flüssige Metall mittels eines Druckgussverfahrens gegossen wird.

17. Verwendung eines Auskleidungselements (10, 35) nach einem der Ansprüche 1 bis 14 für eine Temperiervorrichtung (29) einer Temperierkammer, wobei ausschließlich flüssiger Stickstoff (N2) in den Zuführkanal (13, 37) des Auskleidungselements eingeleitet wird.

## Revendications

1. Élément (10, 35) de revêtement pour un dispositif (29) de régulation de température d'une chambre de température, ledit élément de revêtement pouvant être disposé dans une chambre de température, ledit élément de revêtement comprenant un conduit (13, 37) d'alimentation, un conduit (14, 38) de décharge et au moins un conduit (12, 36) de refroidissement pour un agent réfrigérant gazeux et/ou liquide, ledit conduit de refroidissement servant à refroidir la chambre de température et étant relié au conduit d'alimentation et au conduit de décharge, ledit élément de revêtement comprenant au moins un élément (21, 22) de chauffage électrique qui sert à chauffer la chambre de température, ledit élément de revêtement comprenant au moins un corps (11, 39) d'échangeur de chaleur pour refroidir et chauffer la chambre de température,
**caractérisé en ce que**
le conduit de refroidissement et l'élément de chauffage électrique sont disposés dans le corps d'échangeur de chaleur, ledit corps d'échangeur de chaleur étant fait en métal coulé dans lequel le conduit de refroidissement et l'élément de chauffage électrique sont disposés au moins partiellement.

2. Élément de revêtement selon la revendication 1,
**caractérisé en ce que**
le conduit (12, 36) de refroidissement et l'élément (21, 22) de chauffage électrique sont disposés dans une plane (23) commune dans le corps (11, 39) d'échangeur de chaleur.

3. Élément de revêtement selon la revendication 1 ou 2,
**caractérisé en ce que**
le conduit (12, 36) de refroidissement et l'élément (12, 22) de chauffage électrique sont coulés dans le corps (11, 39) d'échangeur de chaleur.

4. Élément de revêtement selon l'une quelconque des revendications précédentes,
**caractérisé en ce que**
le corps (11, 39) d'échangeur de chaleur se compose d'aluminium coulé ou d'alliage d'aluminium.

5. Élément de revêtement selon l'une quelconque des revendications précédentes,
**caractérisé en ce que**
l'agent réfrigérant est azote gazeux et/ou liquide.

6. Élément de revêtement selon l'une quelconque des revendications précédentes,
**caractérisé en ce qu'**
une pluralité de conduits (12, 36) de refroidissement sont formés.

7. Élément de revêtement selon l'une quelconque des revendications précédentes,
**caractérisé en ce que**
des conduits (12, 36) de refroidissement s'étendent dans le corps (11, 39) d'échangeur de chaleur dans une manière sinueuse et/ou parallèle.

8. Élément de revêtement selon l'une quelconque des revendications précédentes,
**caractérisé en ce que**
parmi le conduit (13, 37) d'alimentation, le conduit (14, 38) de décharge et le conduit (12, 36) de refroidissement, seulement le conduit (12, 36) de refroidissement s'étend dans le corps (11, 39) d'échangeur de chaleur.

9. Élément de revêtement selon l'une quelconque des revendications précédentes,
**caractérisé en ce que**
le conduit (13) d'alimentation forme une pluralité de conduits (16) de distribution et/ou le conduit (14) de décharge forme une pluralité de conduit (17) de collection.

10. Élément de revêtement selon la revendication 9,
**caractérisé en ce qu'**
un conduit (12) de refroidissement est relié à une pluralité de conduits (16) de distribution et/ou de conduits (17) de collection.

11. Élément de revêtement selon l'une quelconque des revendications précédentes,
**caractérisé en ce que**
le conduit (13, 37) d'alimentation, le conduit (14, 38) de décharge et le conduit (12, 36) de refroidissement sont fait en cuivre ou en acier inoxydable.

12. Élément de revêtement selon l'une quelconque des revendications précédentes,
**caractérisé en ce qu'**
une pluralité d'éléments (21, 22) de chauffage électriques sont disposés dans le corps (11, 39) d'échangeur de chaleur.

13. Élément de revêtement selon l'une quelconque des revendications précédentes,
**caractérisé en ce que**
l'élément (10, 35) de revêtement forme une forme en forme de plate, préférablement en forme rectangulaire, cylindrique ou, circulaire.

14. Chambre de température comprenant un dispositif (29) de régulation de température et au moins un élément (10, 35) de revêtement selon l'une quelconque des revendications précédentes.

15. Procédé pour produire un élément (10, 35) de revêtement pour un dispositif (29) de régulation de température d'une chambre de température, ledit élément de revêtement pouvant être disposé dans une chambre de température, ledit élément de revêtement comprenant un conduit (13, 37) d'alimentation, un conduit (14, 38) de décharge et au moins un conduit (12, 36) de refroidissement pour un agent réfrigérant gazeux et/ou liquide, ledit conduit de refroidissement servant à refroidir la chambre de température et étant relié au conduit d'alimentation et au conduit de décharge, ledit élément de revêtement comprenant au moins un élément (21, 22) de chauffage électrique qui sert à chauffer la chambre de température, ledit élément de revêtement comprenant au moins un corps (11, 39) d'échangeur de chaleur pour refroidir et chauffer la chambre de température,
**caractérisé en ce que**
le conduit de refroidissement et l'élément de chauffage électrique sont disposés au moins partiellement dans une cavité d'un moule de coulée pour la formation du corps d'échangeur de chaleur, et du métal étant coulé dans la cavité.

16. Procédé selon la revendication 15,
**caractérisé en ce que**
le métal liquide est coulé au moyen d'un procédé de moulage sous pression.

17. Usage d'une élément (10, 35) de revêtement selon l'une quelconque des revendications 1 à 14 pour un dispositif (29) de régulation de température d'une chambre de température,
dans lequel
seulement l'azote (N2) liquide est alimenté dans le conduit (13, 37) d'alimentation de l'élément de revêtement.
